(19)

Europäisches
Patentamt

European
Patent Office

Office européen
des brevets

(11)   **EP 4 660 950 A1**

(12)   **EUROPEAN PATENT APPLICATION**

(43) Date of publication:
   **10.12.2025   Bulletin 2025/50**

(21) Application number: **24305882.3**

(22) Date of filing: **05.06.2024**

(51) International Patent Classification (IPC):
   *G06T 9/00* (2006.01)        *H04N 19/91* (2014.01)

(52) Cooperative Patent Classification (CPC):
   **H04N 19/91; G06T 9/001**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(71) Applicant: **InterDigital CE Patent Holdings, SAS**
   **75017 Paris (FR)**

(72) Inventors:
   • **MOCQUARD, Olivier**
     **35000 RENNES (FR)**
   • **MARVIE, Jean-Eudes**
     **35830 BETTON (FR)**

(74) Representative: **Vossius & Partner**
   **Patentanwälte Rechtsanwälte mbB**
   **Siebertstraße 3**
   **81675 München (DE)**

(54)   **SYSTEM AND METHOD FOR MESH CLERS CODING**

(57)   Example embodiments provide encoding and decoding methods and apparatus for coding of edgebreaker mesh data. In a decoding method, a first plurality of CLERS symbols are decoded, and a current state is determined based on at least one of the first plurality of CLERS symbols. A bin string is obtained that represents a current CLERS symbol subsequent to the first plurality of CLERS symbols. An inverse binarization is performed to obtain the current CLERS symbol based on the current state and on the bin string. For at least some of the states, a symbol other than "C" is associated with a one-bit bin string. For example, if the current state is a state in which the most-recently-decoded CLERS symbol is "S" the symbol "E" may be associated with the one-bit bin string.

1102
DECODE A FIRST PLURALITY OF CLERS SYMBOLS

1104
DETERMINE A CURRENT STATE BASED ON THE DECODED SYMBOLS

1106
OBTAIN BIN STRING

1108
PERFORM INVERSE BINARIZATION OF BIN STRING

**FIG. 11**

EP 4 660 950 A1

**Description**

**BACKGROUND**

The present disclosure relates to systems and methods for encoding and decoding a mesh based on edgebreaker technology. Edgebreaker is a technology that is capable of efficiently coding the connectivity of a triangular mesh. In its most straightforward implementation, the connectivity of a mesh encoded using edgebreaker is represented by an ordered series made up of the symbols, C, L, E, R, and S, called the "CLERS" sequence. Generally speaking, starting with an initial triangle, these symbols describe different ways to attach a new triangle, providing information on whether or how different edges of the new triangle are connected to one or more of the existing triangles. Edgebreaker technology is described in greater detail, for example in the following sources:

- J. Rossignac, "3D compression made simple: Edgebreaker with ZipandWrap on a corner-table," in Proceedings International Conference on Shape Modeling and Applications, Genova, Italy, 2001. Desribes decoding in a forward direction with the use of a corner table (CT) representation of the mesh, which leads to a very compact algorithm.

- H. Lopes, G. Tavares, J. Rossignac, A. Szymczak and A. Safonova, "Edgebreaker: a simple compression for surfaces with handles.," in ACM Symposium on Solid Modeling and Applications,, Saarbrucken, 2002.

- J. Rossignac, "Edgebreaker: Connectivity compression for triangle meshes," GVU center, Georgia Institute of Technology, 1999. Describes decoding in a forward direction using a half-edge representation.

- J. Rossigniac, "Course on triangle meshes and corner table," 2006.

- M. Isenburg and J. Snoeyink, "Spirale Reversi: Reverse decoding of the Edgebreaker encoding," Computational Geometry, vol. 20, pp. 39-52, 2001. Describes the "spiral reversi" technique, which uses a half edge representation, but performing the decoding in a reverse manner, which leads to faster decoding of O(n).

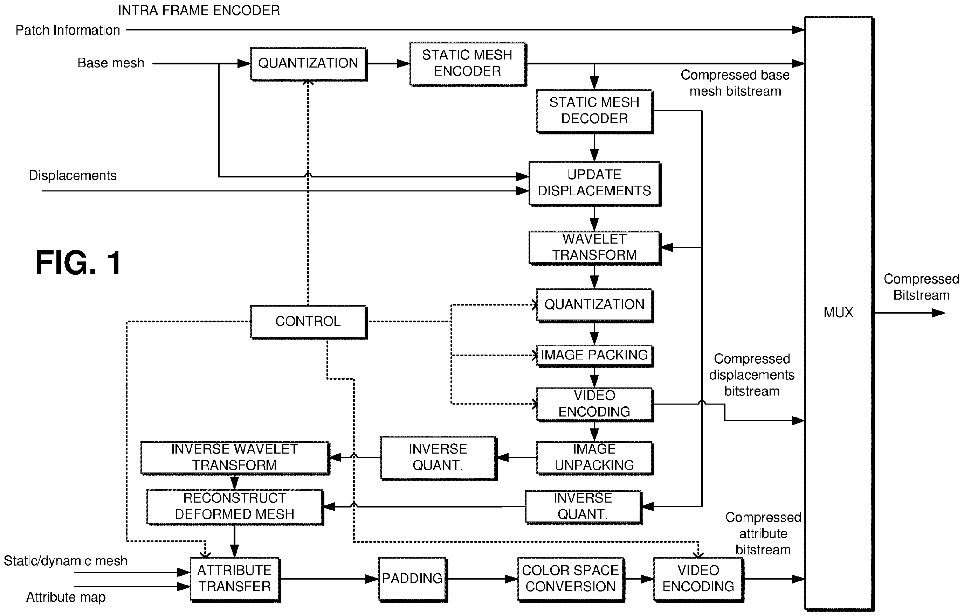

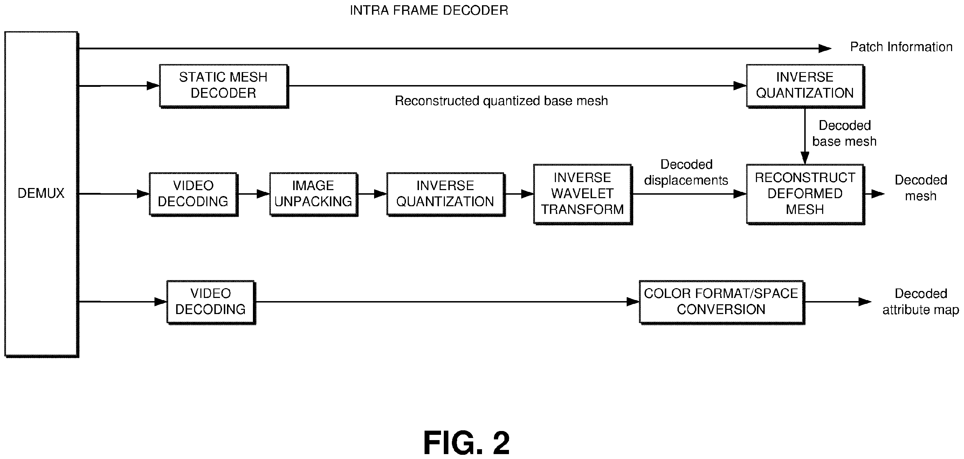

Following the MPEG V-Mesh (now renamed V-DMC) call for proposals, the solution proposed by Apple was selected to become the foundation of the MPEG V-Mesh Test Model (TM). The proposal is described in K. Mammou, J. Kim, A. Tourapis and D. Podborski, "m59281 - [V-CG] Apple's Dynamic Mesh Coding CfP Response," Apple Inc, 2022. Schematic summary figures outlining the proposal are provided in FIG. 1 and FIG. 2 of the present disclosure.

**SUMMARY**

A mesh decoding method according to some embodiments comprises: decoding a first plurality of CLERS symbols; determining a current state based on at least one of the first plurality of CLERS symbols; obtaining a bin string representing a current CLERS symbol subsequent to the first plurality of CLERS symbols; and performing an inverse binarization to obtain the current CLERS symbol based on the current state and the bin string. In some embodiments, in response to a determination that the current state is a state in which a most-recently-decoded CLERS symbol is "S" and that the bin string is a one-bit bin string, the current CLERS symbol is determined to be an "E".

A mesh decoding apparatus according to some embodiments comprises one or more processors configured to perform at least: decoding a first plurality of CLERS symbols; determining a current state based on at least one of the first plurality of CLERS symbols; obtaining a bin string representing a current CLERS symbol subsequent to the first plurality of CLERS symbols; and performing an inverse binarization to obtain the current CLERS symbol based on the current state and the bin string. In some embodiments, in response to a determination that the current state is a state in which a most-recently-decoded CLERS symbol is "S" and that the bin string is a one-bit bin string, the current CLERS symbol is determined to be an "E".

A mesh encoding method according to some embodiments comprises encoding a first plurality of CLERS symbols; determining a current state based on at least one of the first plurality of CLERS symbols; obtaining a current CLERS symbol subsequent to the first plurality of CLERS symbols; and performing a binarization to obtain a bin string based on the current CLERS symbol and the current state. In some embodiments, in response to a determination that the current state is a state in which a most-recently-encoded CLERS symbol is "S" and that the current CLERS symbol is "E", the bin string is a one-bit bin string.

A mesh encoding apparatus according to some embodiments comprises one or more processors configured to perform at least: encoding a first plurality of CLERS symbols; determining a current state based on at least one of the first plurality of CLERS symbols; obtaining a current CLERS symbol subsequent to the first plurality of CLERS symbols; and performing a binarization to obtain a bin string based on the current CLERS symbol and the current state. In some embodiments, in response to a determination that the current state is a state in which a most-recently-encoded CLERS symbol is "S" and that the current CLERS symbol is "E", the bin string is a one-bit bin string.

In some embodiments of the encoding apparatus or method, in response to a determination that the current state is a state in which a most-recently-encoded CLERS symbol is "C" and that the current CLERS symbol is "R", the bin string is a one-bit bin string.

Example embodiments further include a computer readable medium (which may be a non-transitory medium) storing instructions for performing any of the methods described herein.

Example embodiments further include a computer program product comprising instructions for performing any of the methods described herein.

Example embodiments further include a signal including a mesh encoded according to any of the methods described herein. The signal may be stored on a computer-readable medium, which may be a non-transitory computer readable medium.

## BRIEF DESCRIPTION OF THE DRAWINGS

FIG. 1 is a functional block diagram of an example mesh encoding system.

FIG. 2 is a functional block diagram of an example mesh decoding system.

FIG. 3 illustrates an example of an edgebreaker mesh codec according to some embodiments.

FIG. 4 is a flow chart of an encoding process according to some embodiments.

FIG. 5 is a flow chart of a decoding process according to some embodiments.

FIG. 6 illustrates an example of a portion of a mesh illustrating information that may be stored in a corner table data structure.

FIG. 7 illustrates an example of an extended corner table to support UV coordinates attribute and normal vector attributes.

FIG. 8 illustrates an extended corner table data structure used in some embodiments.

FIG. 9 illustrates a VDMC CTC evaluation using the reference software version 8.0, evaluated over 32 frames in C1 lossy conditions.

FIG. 10 illustrates a VDMC CTC evaluation using the reference software version 8.0, evaluated over 32 frames in C2 lossy conditions.

FIG. 11 is a flow diagram illustrating a mesh decoding method according to some embodiments.

FIG. 12 is a flow diagram illustrating a mesh encoding method according to some embodiments.

FIG. 13 is a block diagram of an example of a system in which various aspects and embodiments are implemented.

## DETAILED DESCRIPTION

### Overview of edgebreaker codecs.

Edgebreaker (EB) is a technology for encoding and decoding (collectively "coding") the topology (connectivity and handles) of a mesh.

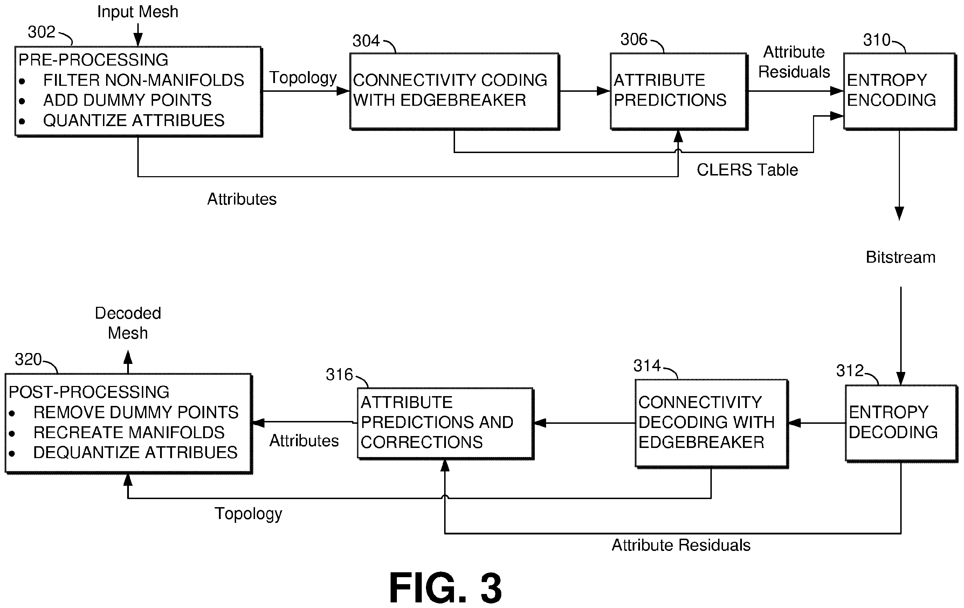

FIG. 3 illustrates an example of an edgebreaker mesh codec according to some embodiments. The top row is the encoding line, and the bottom row is the decoding line. As illustrated in FIG. 3, example embodiments include some or all of the following. During encoding, pre-processing 302 may be used to clean potential connectivity issues (non-manifolds edges and vertices) that can exist on the input mesh. This cleanup is performed because the edgebreaker algorithm by itself does not work on meshes having such connectivity issues. In some embodiments, cleaning non manifold edges and vertices involves duplicating a number of points. Some embodiments keep track of those duplicated vertices to merge those when decoding. This enables to reduce the number of points in the decoded mesh but calls for sending some additional information in the bitstream. In some embodiments, this pre-processing 302 further includes adding some dummy points to fill potential holes on the surface because the edgebreaker algorithm alone does not handle holes. Example embodiments operate to fill the holes before encoding and recreate the holes after decoding. Example embodiments use "virtual" dummy points and generate and encode dummy triangles attached to these dummy points, but the 3D positions of those points are not encoded or decoded. In some embodiments, the vertex attributes are quantized if needed. Those attributes can be provided to the coder already quantized.

Example embodiments encode the connectivity of the mesh AT 304 using a modified version of the edgebreaker algorithm which generates a CLERS table (a table made of 'C', 'L', 'E', 'R', and 'S' symbols). This stage also generates some tables in memory that are used for the attribute prediction stage. The vertex attributes are then predicted at 306, starting by the position ones. Then, other attributes are predicted, eventually relying on the position predictions, which it is the case for the texture UV coordinates. Configuration and metadata are also provided in the bitstream, the CLERS table, some other connectivity and all the attribute prediction residuals are entropy coded at 310 and added to the bitstream.

In an example decoding method, all the entropy coded sub-bitstreams are entropy decoded at 312. The mesh connectivity is reconstructed at 314 using the CLERS table and the edgebreaker algorithm. Extra information may be used to manage the handles, which describe the topology. We use the mesh connectivity as well as a minimal set of vertex positions expressed in 3D coordinates to predict all the other per-vertex positions at 316. We then apply the attribute residuals to correct the predictions and obtain the reconstructed vertex positions. The other attributes are also decoded at 316, potentially relying on decoded positions, as for UV coordinates. The connectivity of attributes using separate index tables is reconstructed using per a per edge binary seam information that is entropy coded.

In a post-processing stage at 320, we remove the dummy triangles, we optionally recreate the non-manifold issues in case the coder is configured to perform lossless coding, and we optionally dequantize the vertex attributes if the model was quantized by encoder.

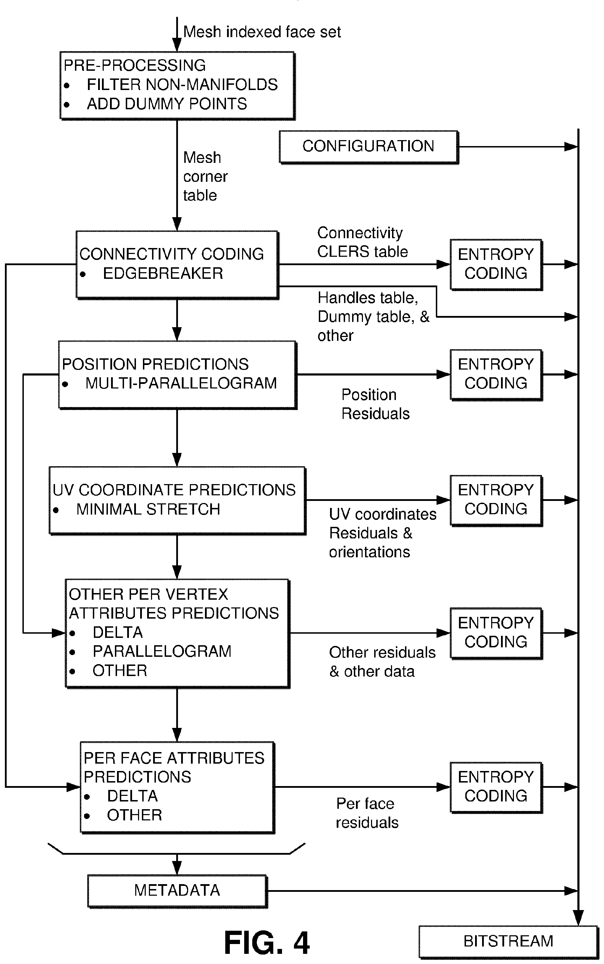

FIG. 4 is a flow chart of an encoding process according to some embodiments.

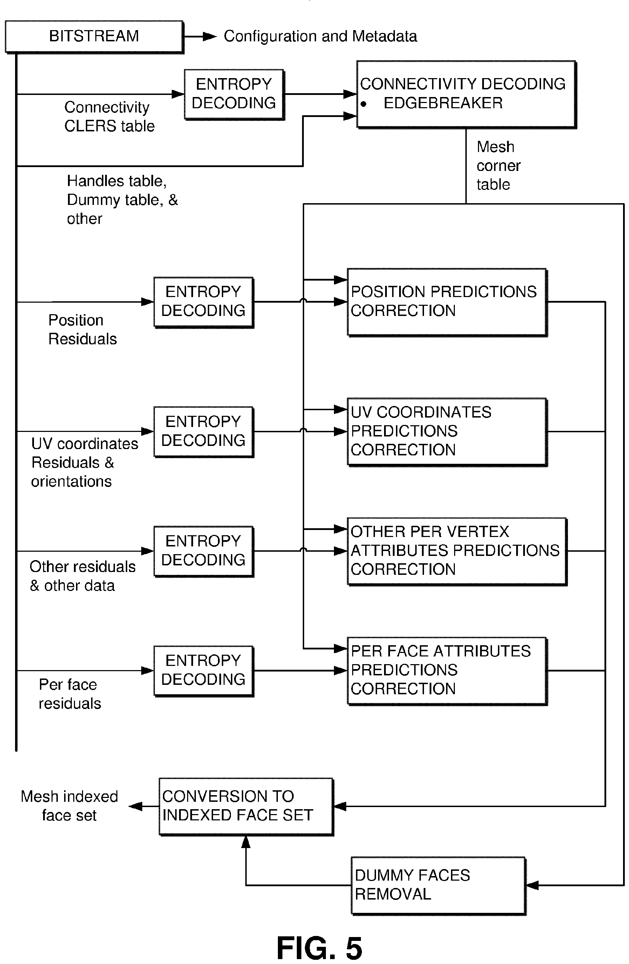

FIG. 5 is a flow chart of a decoding process according to some embodiments.

**Overview of corner tables.**

A corner table data structure to represent a mesh is described in J. Rossignac, "3D compression made simple: Edgebreaker with ZipandWrap on a corner-table," in Proceedings International Conference on Shape Modeling and Applications, Genova, Italy, 2001; and further described in J. Rossigniac, "Course on triangle meshes and corner table," 2006.

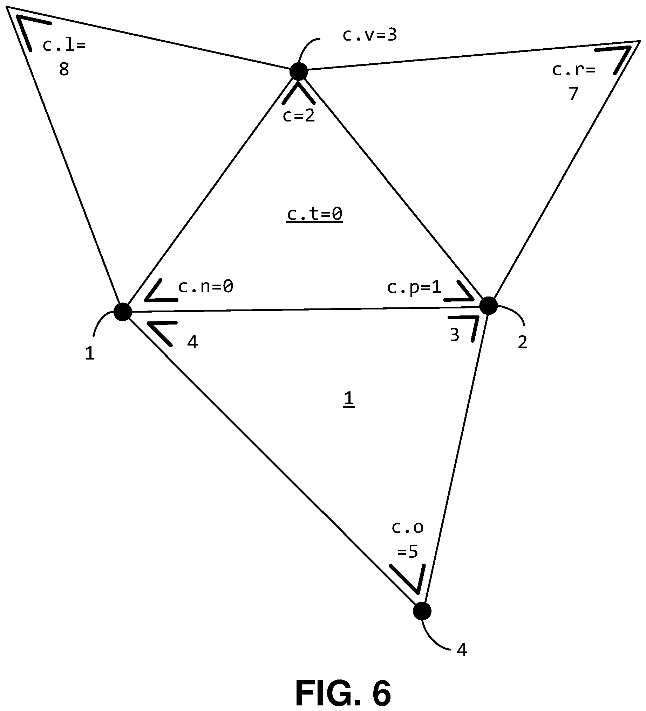

FIG. 6 illustrates a portion of a triangular mesh illustrating information that may be stored in a corner table (also referred to as an OV table). For each corner index c of a corner in the corner table, the notation c.v=3 identifies the index of the vertex at which that corner is located. The index c.t=0 is the index of the triangle that includes corner c. Within that triangle, the index c.n=0 identifies the next corner (in a counterclockwise direction), and c.p=1 identifies the previous corner. The index c.o identifies the corner that is opposite to the corner c. For example, in FIG. 6, corner c.o=5 is opposite corner c=2 (and vice versa). The index c.l identifies the corner to the left of corner c, and the index c.r identifies the corner to the right of corner c. The connectivity as shown in FIG. 6 may be recorded in a corner table with entries that include the following:

| Corner Index | Vertex Index | Opposite Corner Index |
| --- | --- | --- |
| 0 | 1 | 7 |
| 1 | 2 | 8 |
| 2 | 3 | 5 |
| 3 | 2 | 9 |
| 4 | 1 | 6 |
| 5 | 4 | 2 |

The "corner index" column does not need to be stored in the table because it corresponds to the position of each row within the table. The triangle index for each corner can be calculated as

$$c.t = INT(c/3)$$

Thus, corners 0, 1, and 2 are all in the triangle with index 0; corners 3, 4, and 5 are all in the triangle with index 1; and so on. Additional relationships among entries in the corner table may be expressed as follows:

$$c.n = 3c.t + (c+1) \text{ MOD } 3$$

$$c.p = c.n.n$$

$$c.l = c.p.o$$

$$c.r = c.n.o$$

In some embodiments, an additional table may be used to store position coordinates of each vertex.

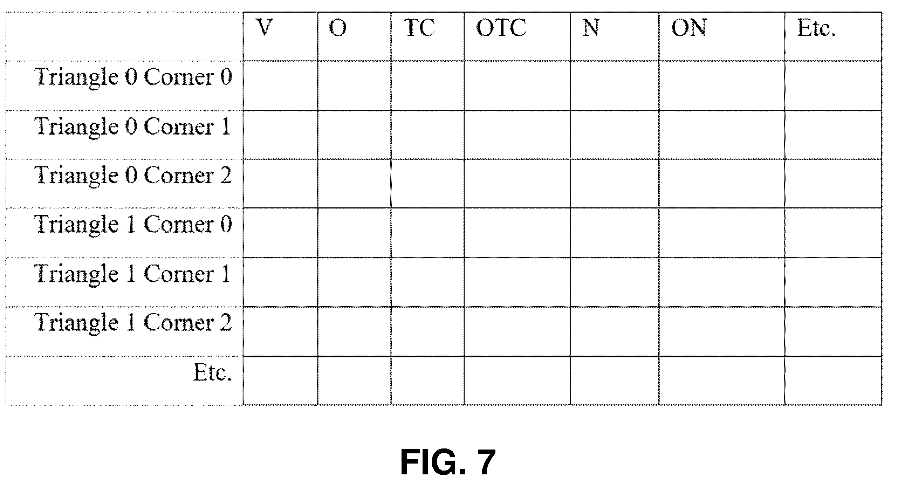

FIG. 7 illustrates an example of an extended corner table as used in some embodiments to support UV coordinates attribute and normal vector attributes, both using separate indexing tables, resp. TC/OTC and N/ON. Texture coorinates and normal vectors may be stored in two other separate tables.

Example embodiments extend the corner table data structure to support other attributes with or without secondary attribute indices, as illustrated in FIG. 7. In case the mesh does not have separate indices to dereference the UV coordinates attributes, example embodiments include a table of UV coordinates alongside the position table. The UV coordinates table is then dereferenced using V as for the position. Otherwise, some embodiments also add two tables TC and OTC to code the connectivity of (to dereference) the UV coordinates. TC is used to store UV coordinates indices and OTC to store the opposite corners for the UV connectivity. The same principle may be applied to add support for per vertex normal (N / ON / normal_vectors) or per vertex colors (C / OC / colors ).

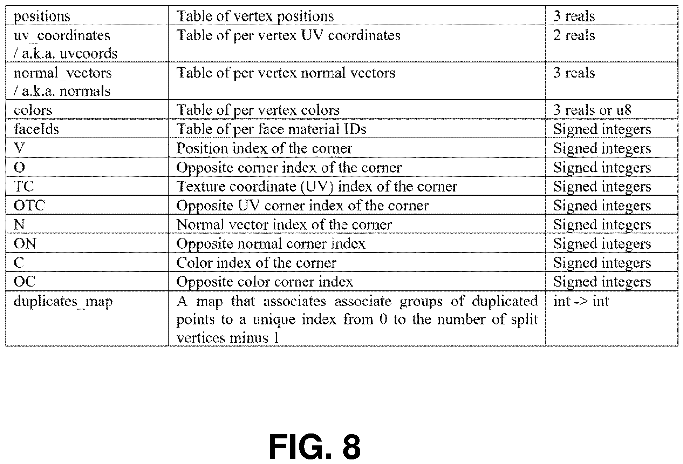

FIG. 8 schematically illustrates an extended Corner Table data structure that may be used in memory in an example embodiment.

FIG. 8 summarizes the data structures that may be used to store the information of an extended corner table. This approach can be extended for any per vertex attribute type, to use or not dedicated index tables modeled using the pair (index table / opposite table). Per face IDs are included in the table in this implementation.

**Overview of CLERS table coding.**

Edgebreaker (EB) is a technology for encoding and decoding (collectively "coding") the topology (connectivity and handles) of a mesh.

In V-DMC, a base mesh encoding scheme is specified in Annex I (MPEG EdgeBreaker Static Mesh Coding). The edgebreaker algorithm generates a CLERS table (a table made of 'C', 'L', 'E', 'R', and 'S' symbols) representing the connectivity of the mesh position vertices. Arithmetic coding is used to generate a compact representation of this table.

In European Patent Application No. 23305505.2 (filed 6 April 2023) and subsequent international application PCT/EP2024/058981 (filed 3 April 2024), the CLERS symbols are associated to either 1 or 3 bit bin strings, and each of those is encoded using a context that may depend on the previously coded bins for a symbol, and on the previous coded symbols.

Examples of context selection schemes are described in "Context Reduction for CLERS Coding," ISO/IEC JTC1/SC29/WG7, m63910, Geneva, Jul 2023; "Report on Context Reduction for CLERS Coding," ISO/IEC JTC1/SC29/WG7, m64736, Hannover, Oct 2023; and "Report on Skip bit in CLERS Coding, ISO/IEC JTC1/SC29/WG7," m65892, Online, Jan 2024. Compared to previous schemes, these context selection schemes reduce the number of considered states as evaluated from the previously encoded symbols, and they skip one coded bin when the previous symbol is 'C' (as the only possible following symbols are 'C', 'R' and 'S').

A further development in CLERS table coding was adopted at MPEG 146 in Rennes for inclusion in the VDMC CD. In this latest revision, unary coding is used to binarize the CLERS symbols, then using 1 to 4 bins to encode each symbol.

In V-DMC Draft CD d26 , m68110_d26, Rennes, Apr. 2024, and in ISO/IEC CD 23090-29 Video-based mesh coding, ISO/IEC JTC1/SC29/WG7, MDS23903, Rennes, Apr. 2024, the symbols in the CLERS table are represented by mesh_clers_symbol[ i ] syntax elements. The encoding/decoding state depends on the previously coded symbols, and the following state variables are updated after each element is encoded/decoded: ClersSymbol0 (the previous CLERS symbol), ClersSymbol1 (the symbol preceding the previous CLERS symbol) and Crun (the number of successive 'C' symbols).

```
ClersSymbol1 = ClersSymbol0
ClersSymbol0 = mesh_clers_symbol[ i ]
if( mesh_clers_symbol[ i ] == CLERS_C )
    Crun += 1
else
    Crun = 0
```

The initial values of ClersSymbol1, ClersSymbol0, and Crun determine the starting encoding/decoding state for the first CLERS symbol. The selection of the context CtxIdxClers for each coded bin is evaluated as a function of the bin index BinIdxClers and of ClersSymbol0, ClersSymbol1, Crun and mesh_clers_count (the number of encoded CLERS symbols). CtxIdxClers may be determined as follows:

```
if( ClersSymbol0 == CLERS_C )
    CtxIdxClers = ( mesh_clers_count <= 3000 ) ? 0
                                    : Crun < 2 ? 0

: Crun < 7 ? 1 : 2
else if( ( ClersSymbol0== CLERS_S )
    CtxIdxClers = 3
else if( ( ClersSymbol0== CLERS_L )
    CtxIdxClers = 4
else if( ClersSymbol0 == CLERS_R )
    CtxIdxClers = 5 + ( ClersSymbol1 == CLERS_C ? 0
                : ( ClersSymbol1 == CLERS_R ? 1 : 2 ) )
else /* if ClersSymbol0 == CLERS_E */
    CtxIdxClers = 8
CtxIdxClers += 9 * BinIdxClers
if (BinIdxClers > 1) CtxIdxClers -= 3 * (BinIdxClers - 1)
```

Note that, until the parameter BinIdxClers is introduced in the last two lines above, the value of CtxIdxClers is an integer value in the range [0..8]. As described in greater detail below, this value may be used in some embodiments as a global state for the coding of CLERS symbols.

In this way, a global state whose value is in the range [0..8] is evaluated from the succession of previously encoded symbols (and the total number of symbols to encode). When the previous symbol is 'C', the global state is in the range [0..2] (when the previous symbol is 'C', the current symbol can only be 'C', 'R' or 'S'.

The context used for arithmetic coding of a bin is different for each global state and bin index (1 to 2 bins when context is 0,1,2 and 1 to 4 bins when context is .3,4,5,6,7,8 - 2x3+4x6=30 contexts). CtxIdxClers has a value in the range [0..29] and defines the context to be used for a given bin.

Parsing of mesh CLERS symbols is performed for symbol in mesh_clers_symbol syntax element with index i. The result is the unsigned syntax element value val parsed and constructed as:

```
val = 0
nbBins = 4
for( BinIdxClers = 0; BinIdxClers < nbBins; BinIdxClers++ ) {
    bitClers = dec_aebin( )
    if ((bitClers == 0) || ( (BinIdxClers == 1) && (ClersSymbol0 ==
CLERS_C)))
        nbBins = BinIdxClers + 1
    val += bitClers << BinIdxClers
}
```

The mesh CLERS symbol inverse binarization when ClersSymbol0 is not CLERS_C may be performed as shown in the following table:

| mesh_clers_symbol[i] | bin string | | | |
|---|---|---|---|---|
| C | 0 | | | |
| R | 1 | 0 | | |
| S | 1 | 1 | 0 | |
| L | 1 | 1 | 1 | 0 |
| E | 1 | 1 | 1 | 1 |

The mesh CLERS symbol inverse binarization when ClersSymbol0 is CLERS_C may be performed as shown in the following table:

| mesh_clers_symbol[i] | bin string | |
|---|---|---|
| C | 0 | |
| R | 1 | 0 |
| S | 1 | 1 |

In this way, a unique bin string is associated to each CLERS symbol. The bin string is truncated when the global state is in the range [0..2] (i.e. when the previous symbol is 'C' or CLERS_C). However, using this unique bin string association is not optimal as for instance, depending on the global state, 'C' is not always more probable than 'R', and more generally the C R S L E order is not fulfilled.

Example embodiments employ systems and methods for the encoding and decoding (collectively "coding") of symbols in a CLERS table. Such embodiments may be incorporated in a codec such as the VDMC CD to improve the encoding/decoding complexity by reducing the number of coded bins while preserving or even enhancing the compression gains. In example embodiments, the reduction in the number of coded bins is achieved by assigning bin strings to symbols dependent on the current global state.

The applicants have experimentally evaluated the occurrence of symbols depending on the global state as defined above and found that, contrary to the assumption of prior CLERS table coding techniques, the symbol 'C' is not always the most probable symbol. Thus the C-R-S-L-E ordering resulting in the bin strings in the tables above is not optimal.

When evaluating over the complete set of meshes that are encoded for the first 32 frames in the current common tests conditions (CTC) for V-DMC (C0 - lossless, C1 lossy all intra, and C2 lossy low delay) the count of occurrences of each symbol value depending on the current global state is as follows:

| State | C | R | S | L | E |
|---|---|---|---|---|---|
| 0 | 2816329 | 2930627 | 328281 | 0 | 0 |
| 1 | 911782 | 2276438 | 185620 | 0 | 0 |
| 2 | 1392 | 1487 | 250 | 0 | 0 |
| 3 | 38631 | 90295 | 11175 | 86254 | 627706 |
| 4 | 117624 | 83721 | 11452 | 27010 | 81783 |
| 5 | 3418165 | 1545018 | 221255 | 15661 | 10887 |
| 6 | 1433470 | 285507 | 52094 | 100889 | 20573 |
| 7 | 218762 | 62008 | 14549 | 66850 | 75909 |
| 8 | 496051 | 264062 | 29385 | 24926 | 46817 |

This results in the following order for each global state:

| State | Order |
|---|---|
| 0 | RCS(LE) |
| 1 | RCS(LE) |
| 2 | RCS(LE) |

(continued)

| State | Order |
|-------|-------|
| 3 | ERLCS |
| 4 | CRELS |
| 5 | CRSLE |
| 6 | CRLSE |
| 7 | CELRS |
| 8 | CRESL |

The table above lists the symbols in order from most common to least common. For example, in state 3, "E" is the most common symbol, followed in decreasing order by "R", "L", "C", and "S". In states 0, 1, and 2, the notation (LE) is used to indicate that the symbols "L" and "E" do not occur in those states.

The corresponding bin strings may then be as follows:

```
                    Bin Strings                             # Global State
'R' '0', 'C':'10', 'S':'11', 'L':n.a., 'E':n.a.,           # 0
'R' '0', 'C':'10', 'S':'11', 'L':n.a., 'E':n.a.,           # 1
'R':'0', 'C':'10', 'S':'11', 'L':n.a., 'E':n.a.,           # 2
'E':'0', 'R':'10', 'L':'110', 'C':'1110','S':'1111',       # 3
'C':'0', 'R':'10', 'E':'110', 'L':'1110','S':'1111',       # 4
'C':'0', 'R':'10', 'S':'110', 'L':'1110','E':'1111',       # 5
'C':'0', 'R':'10', 'L':'110', 'S':'1110','E':'1111',       # 6
'C':'0', 'E':'10', 'L':'110', 'R':'1110','S':'1111',       # 7
'C':'0', 'R':'10', 'E':'110', 'S':'1110','L':'1111',       # 8
```

An example of a reverse binarization from bin strings to symbols, based in part on the global state, is represented by the following table.

| | | Bin String | | | | | |
|---|---|---|---|---|---|---|---|
| | | **0** | **10** | **11** | **110** | **1110** | **1111** |
| **State** | **0** | R | C | S | n/a | n/a | n/a |
| | **1** | R | C | S | n/a | n/a | n/a |
| | **2** | R | C | S | n/a | n/a | n/a |
| | **3** | E | R | n/a | L | C | S |
| | **4** | C | R | n/a | E | L | S |
| | **5** | C | R | n/a | S | L | E |
| | **6** | C | R | n/a | L | S | E |
| | **7** | C | E | n/a | L | R | S |
| | **8** | C | R | n/a | E | S | L |

In some embodiments, a lookup table is used to perform the binarization and/or the inverse binarization. The lookup table may be a table as shown above or a variation of the table obtained by one or more of: swapping all "0" and "1" values in the bin strings; swapping the CLERS symbols associated with bin strings "10" and "11" for any or all of the states 0 through 2; or swapping CLERS the symbols associated with bin strings "1110" and "1111" for any or all of the states 3 through 8.

Using the foregoing assignment of bin strings to symbols for different global states, the number of coded bins in the VDMC test sequences may be reduced by more than 10% on average. The decoding speed may then be positively impacted.

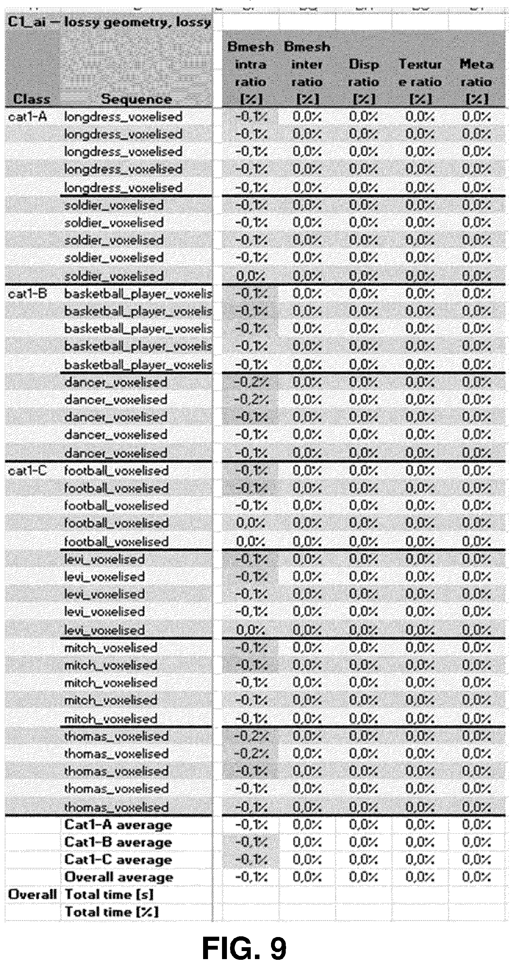

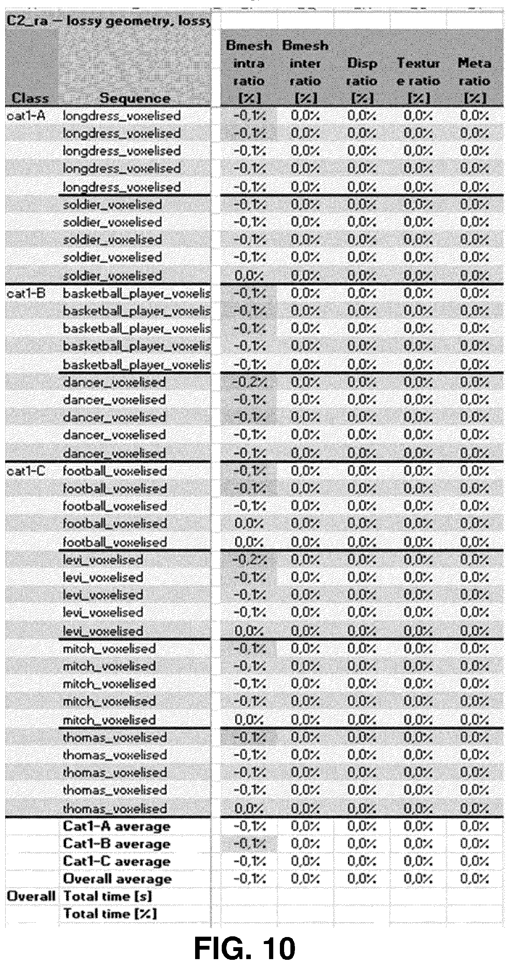

In some embodiments, an assignment of bin strings as shown above enables the enhancement of the compression of the connectivity, resulting in smaller bistreams as illustrated in FIGs. 9 and 10. FIG. 9 illustrates a VDMC CTC evaluation using the reference software version 8.0, evaluated over 32 frames in C1 lossy conditions. FIG. 10 illustrates a VDMC CTC evaluation using the reference software version 8.0, evaluated over 32 frames in C2 lossy conditions. Overall mesh sub-bitstream size is reduced by up to 0.2% depending on sequences and rates with no significant loss observed in any test condition.

In some embodiments, the initial global state and/or initial values of variables used to determine the global state are selected based on the statistics of test sequences. Observing the occurrences of the first symbols in the tested sequences it has been observed that the most probable first symbols to encode are 'C', then 'E', with the following frequencies:

{'C': 1414, 'R': 138, 'S': 55, 'L': 69, 'E': 758}.

In some embodiments, the initial global state is set to 7. This may be done by setting ClersSymbol0 = 'R'; ClersSymbol1 = 'E', which, using the examples of states given above results in an initial global state of 7. More generally, in some embodiments, the binarization of the first symbol in a CLERS sequence is performed using a state in which 'C' is binarized with a one-bit bin string and 'E' is binarized with a two-bit bin string.

It should be understood that the same results would be achieved by switching the 0 and 1 values. Some embodiments thus use an assignment of bin strings as described above but with the 0 and 1 values switched.

In addition, the same results may be achieved by switching the bin strings assigned to the two least-probable symbols in one or more of the states, since those bin strings have the same length. For example, in state 8, the assignment of 'C':'0', 'R':'10', 'E':'110', 'S':'1110','L':'1111' is replaced in some embodiments with 'C':'0', 'R':'10', 'E':'110', 'L':'1110','S':'1111'.

In some embodiments, the variability of the bin strings is reduced by reusing similar bin strings for several states to reduce the lookup table size for reverse conversion, but increasing the number of coded bins.

Different embodiments may use different definitions of the global states. In some embodiments, the global state is determined based on ClersSymbol0 (the previous CLERS symbol), ClersSymbol1 (the symbol preceding the previous CLERS symbol), Crun (the number of successive 'C' symbols through the previous CLERS symbol) and mesh_clers_count (the total number of CLERS symbols). In some embodiments, the global state may be represented by CtxIdxClers and may be determined as follows:

```
if( ClersSymbol0 == CLERS_C )
        CtxIdxClers = ( mesh_clers_count <= 3000 ) ? 0
                                        : Crun < 2 ? 0


        : Crun < 7 ? 1 : 2
else if( ( ClersSymbol0== CLERS_S )
        CtxIdxClers = 3
else if( ( ClersSymbol0== CLERS_L )
        CtxIdxClers = 4
else if( ClersSymbol0 == CLERS_R )
        CtxIdxClers = 5 + ( ClersSymbol1 == CLERS_C ? 0
                    : ( ClersSymbol1 == CLERS_R ? 1 : 2 ) )
else /* if ClersSymbol0 == CLERS_E */
        CtxIdxClers = 8
```

In this example, states 0, 1, and 2 are states in which the most recently coded symbol is "C", state 3 is a state in which the most recently coded symbol is "S", state 4 is a state in which the most recently coded symbol is "L", states 5, 6, and 7 are states in which the most recently coded symbol is "R", and state 8 is a state in which the most recently coded symbol is E. Where the state is not entirely determined by the most recently coded symbol, it is determined additionally based on other factors, such as the total number of symbols, the number of successive "C" symbols through the previous symbol, and/or the type of symbol immediately preceding the most recently coded symbol. In this way, the current state is based on one or more of: a most recently decoded CLERS symbol, a CLERS symbol immediately preceding the most recently decoded CLERS symbol, a total number of CLERS symbols, or a number of successive decoded 'C' symbols through the most recently decoded CLERS symbol. Different techniques of selecting a current state may alternatively be used.

In example embodiments, the state used for binarization or inverse binarization of the current CLERS symbol is independent of a bin index within the bin string.

While example embodiments described expressly herein use eight different available states, other embodiments may use different numbers of states. For example, fewer than eight states may be used. This may be accomplished by, for example, collapsing states 0-2 into a single state and/or collapsing states 4 and 8 into a single state, among other options. Advantageously, no more than eight states are available. In some embodiments, more than two states are available.

Reducing the number of bins to encode according to embodiments described herein has a direct incidence on the execution time because fewer instructions are involved. In some embodiments, the conversion from bin string to symbol depending on the state may be implemented using a simple table lookup.

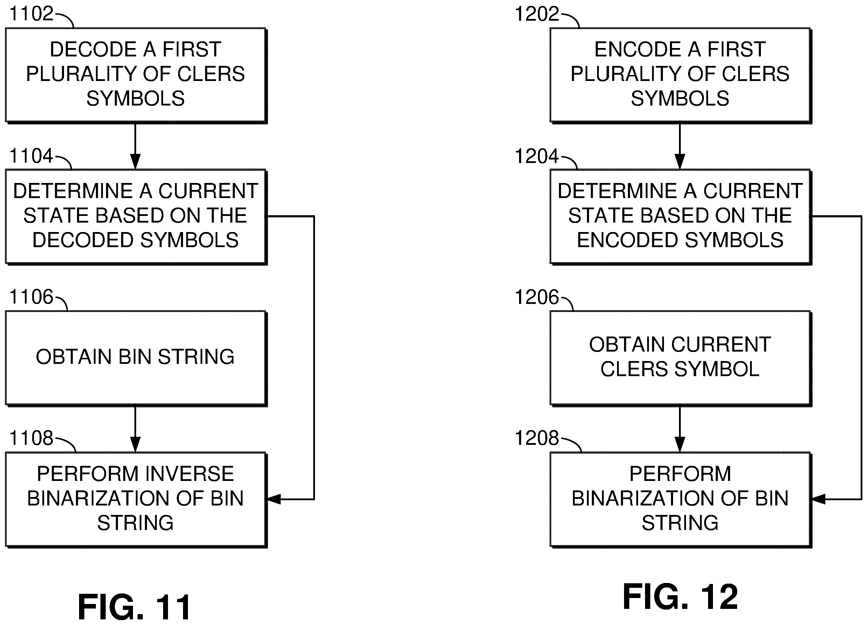

FIG. 11 illustrates a mesh decoding method performed in some embodiments. At 1102, a first plurality of CLERS symbols is decoded. At 1104, a current state is determined based on at least one of the first plurality of CLERS symbols, e.g. based on the most recently decoded CLERS symbol, and in some cases on additional information. At 1106, a bin string is obtained (e.g. by arithmetic decoding of a bitstream) that represents a current CLERS symbol subsequent to the first plurality of CLERS symbols. At 1108, an inverse binarization is performed to obtain the current CLERS symbol based on the current state and the bin string. As described above, example embodiments do not rely on the premise that a "C" symbol is always the most probable symbol. For example, in response to a determination that the current state is a state in which a most-recently-decoded CLERS symbol is "S" and that the bin string is a one-bit bin string (e.g. a "0" or a "1", depending on the convention), the current CLERS symbol is determined to be an "E". As another example, in response to a determination that the current state is a state in which a most-recently-decoded CLERS symbol is "C" and that the bin string is a one-bit bin string, the current CLERS symbol is determined to be an "R". In some example embodiments, a mesh decoder includes one or more processors configured to perform a method as illustrated in FIG. 11.

FIG. 12 illustrates a mesh encoding method according to some embodiments. At 1202, a first plurality of CLERS symbols is encoded. At 1204, a current state is determined based on at least one of the first plurality of CLERS symbols. At 1206, a current CLERS symbol is obtained subsequent to the first plurality of CLERS symbols. At 1208, a binarization is performed to obtain a bin string based on the current CLERS symbol and the current state. Example embodiments do not rely on the premise that a "C" symbol is always the most probable symbol. For example, in response to a determination that the current state is a state in which a most-recently-encoded CLERS symbol is "S" and that the current CLERS symbol is "E", the symbol may be binarized as a one-bit bin string. In response to a determination that the current state is a state in which a most-recently-encoded CLERS symbol is "C" and that the current CLERS symbol is "R", the symbol may be binarized as a one-bit bin string. In some example embodiments, a mesh encoder includes one or more processors configured to perform a method as illustrated in FIG. 12.

**Example system hardware.**

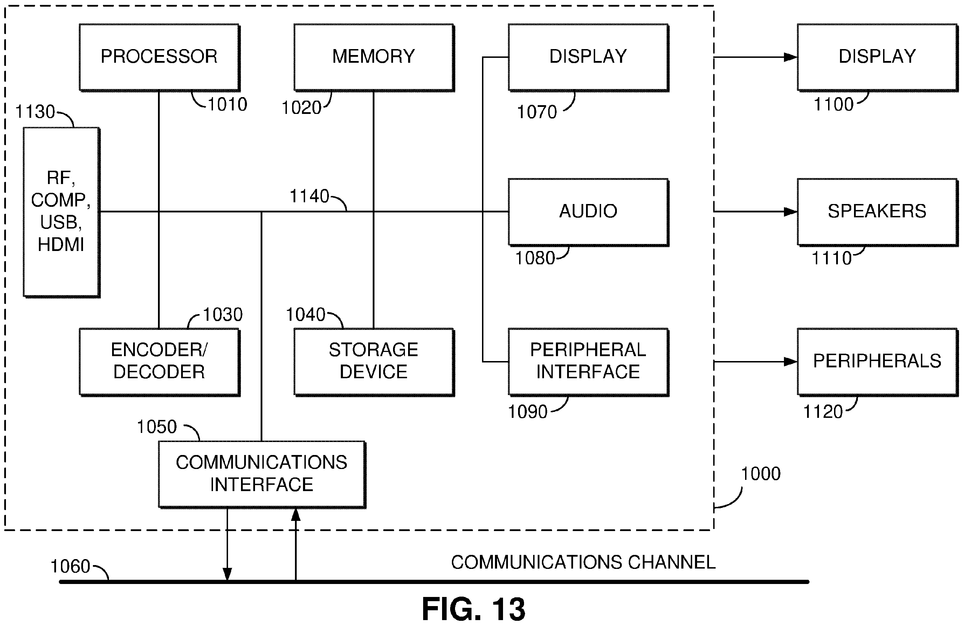

Example embodiments of encoders and/or decoders (collectively coders) configured to implement embodiments described herein may be implemented using systems such as the system of FIG. 13. FIG. 13 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1C, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Additional embodiments.**

Example embodiments provide encoding and decoding methods and apparatus for coding of edgebreaker mesh data. In a decoding method, a first plurality of CLERS symbols are decoded, and a current state is determined based on at least one of the first plurality of CLERS symbols. A variable-length bin string is obtained that represents a current CLERS symbol subsequent to the first plurality of CLERS symbols. An inverse binarization is performed to obtain the current CLERS symbol based on the current state and on the bin string. For at least some of the states, a symbol other than "C" is associated with a one-bit bin string. For example, if the current state is a state in which the most-recently-decoded CLERS symbol is "S" the symbol "E" may be associated with the one-bit bin string.

A mesh decoding method according to some embodiments comprises: decoding a first plurality of CLERS symbols; determining a current state based on at least one of the first plurality of CLERS symbols; obtaining a bin string representing a current CLERS symbol subsequent to the first plurality of CLERS symbols; and performing an inverse binarization to obtain the current CLERS symbol based on the current state and the bin string. In some embodiments, in response to a determination that the current state is a state in which a most-recently-decoded CLERS symbol is "S" and that the bin string is a one-bit bin string, the current CLERS symbol is determined to be an "E".

A mesh decoding apparatus according to some embodiments comprises one or more processors configured to perform at least: decoding a first plurality of CLERS symbols; determining a current state based on at least one of the first plurality of CLERS symbols; obtaining a bin string representing a current CLERS symbol subsequent to the first plurality of CLERS symbols; and performing an inverse binarization to obtain the current CLERS symbol based on the current state and the bin string. In some embodiments, in response to a determination that the current state is a state in which a most-recently-decoded CLERS symbol is "S" and that the bin string is a one-bit bin string, the current CLERS symbol is determined to be an "E".

In some embodiments of the decoding method or apparatus, in response to a determination that the current state is a state in which a most-recently-decoded CLERS symbol is "C" and that the bin string is a one-bit bin string, the current CLERS symbol is determined to be an "R".

In some embodiments of the decoding method or apparatus, the inverse binarization is performed using a lookup table. In some such embodiments, the lookup table may be:

| | | Bin String | | | | | |
|---|---|---|---|---|---|---|---|
| | | 0 | 10 | 11 | 110 | 1110 | 1111 |
| State | 0 | R | C | S | n/a | n/a | n/a |
| | 1 | R | C | S | n/a | n/a | n/a |
| | 2 | R | C | S | n/a | n/a | n/a |
| | 3 | E | R | n/a | L | C | S |
| | 4 | C | R | n/a | E | L | S |
| | 5 | C | R | n/a | S | L | E |
| | 6 | C | R | n/a | L | S | E |
| | 7 | C | E | n/a | L | R | S |
| | 8 | C | R | n/a | E | S | L |

or any variation of the table obtained by one or more of: swapping all "0" and "1" values in the bin strings (thus reversing the convention for unary codes); swapping the CLERS symbols associated with bin strings "10" and "11" for any or all of the states 0 through 2; or swapping CLERS the symbols associated with bin strings "1110" and "1111" for any or all of the states 3 through 8.

In some embodiments of the decoding method or apparatus, the current state is based on one or more of: a most recently decoded CLERS symbol, a CLERS symbol immediately preceding the most recently decoded CLERS symbol, a total number of CLERS symbols, or a number of successive decoded 'C' symbols through the most recently decoded CLERS symbol.

In some embodiments of the decoding method or apparatus, the current state is selected from among no more than eight available states. In some embodiments, the current state is selected from among more than two available states.

In some embodiments of the decoding method or apparatus, the bin string representing a current CLERS symbol is obtained by arithmetic decoding of a bitstream.

A mesh encoding method according to some embodiments comprises encoding a first plurality of CLERS symbols; determining a current state based on at least one of the first plurality of CLERS symbols; obtaining a current CLERS symbol subsequent to the first plurality of CLERS symbols; and performing a binarization to obtain a bin string based on the current CLERS symbol and the current state. In some embodiments, in response to a determination that the current state is a state in which a most-recently-encoded CLERS symbol is "S" and that the current CLERS symbol is "E", the bin string is a one-bit bin string. In some embodiments, in response to a determination that the current state is a state in which a most-recently-encoded CLERS symbol is "C" and that the current CLERS symbol is "R", the bin string is a one-bit bin string.

A mesh encoding apparatus according to some embodiments comprises one or more processors configured to perform at least: encoding a first plurality of CLERS symbols; determining a current state based on at least one of the first plurality of CLERS symbols; obtaining a current CLERS symbol subsequent to the first plurality of CLERS symbols; and performing a binarization to obtain a bin string based on the current CLERS symbol and the current state. In some embodiments, in response to a determination that the current state is a state in which a most-recently-encoded CLERS symbol is "S" and that the current CLERS symbol is "E", the bin string is a one-bit bin string. In some embodiments, in response to a determination that the current state is a state in which a most-recently-encoded CLERS symbol is "C" and that the current CLERS symbol is "R", the bin string is a one-bit bin string.

In some embodiments of the encoder apparatus or method, the binarization is performed using a lookup table, such as the following:

EP 4 660 950 A1

|  |  | Bin String | | | | | |
|---|---|---|---|---|---|---|---|
|  |  | 0 | 10 | 11 | 110 | 1110 | 1111 |
| **State** | 0 | R | C | S | n/a | n/a | n/a |
|  | 1 | R | C | S | n/a | n/a | n/a |
|  | 2 | R | C | S | n/a | n/a | n/a |
|  | 3 | E | R | n/a | L | C | S |
|  | 4 | C | R | n/a | E | L | S |
|  | 5 | C | R | n/a | S | L | E |
|  | 6 | C | R | n/a | L | S | E |
|  | 7 | C | E | n/a | L | R | S |
|  | 8 | C | R | n/a | E | S | L |

or any variation of the table obtained by one or more of: swapping all "0" and "1" values in the bin string; swapping the symbols associated with "10" and "11" for any or all of the states 0 through 2; or swapping the symbols associated with "1110" and "1111" for any or all of the states 3 through 8.

In some embodiments of the encoder apparatus or method, the current state is based on one or more of: a most recently encoded CLERS symbol, a CLERS symbol immediately preceding the most recently encoded CLERS symbol, a total number of CLERS symbols, or a number of successive encoded 'C' symbols through the most recently encoded CLERS symbol.

In some embodiments of the encoder apparatus or method, the current state is selected from among no more than eight available states. In some embodiments, the current state is selected from more than two available states.

Example embodiments further include a computer readable medium (which may be a non-transitory medium) storing instructions for performing any of the methods described herein.

Example embodiments further include a computer program product comprising instructions for performing any of the methods described herein.

Example embodiments further include a signal including a mesh encoded according to any of the methods described herein. The signal may be stored on a computer-readable medium, which may be a non-transitory computer readable medium.

Various hardware elements of one or more of the described embodiments may be referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1.  A mesh decoding method comprising:

decoding a first plurality of CLERS symbols;

determining a current state based on at least one of the first plurality of CLERS symbols;

obtaining a bin string representing a current CLERS symbol subsequent to the first plurality of CLERS symbols; and

performing an inverse binarization to obtain the current CLERS symbol based on the current state and the bin string;

wherein, in response to a determination that the current state is a state in which a most-recently-decoded CLERS symbol is "S" and that the bin string is a one-bit bin string, the current CLERS symbol is determined to be an "E".

2. A mesh decoding apparatus comprising one or more processors configured to perform at least:

decoding a first plurality of CLERS symbols;

determining a current state based on at least one of the first plurality of CLERS symbols;

obtaining a bin string representing a current CLERS symbol subsequent to the first plurality of CLERS symbols; and

performing an inverse binarization to obtain the current CLERS symbol based on the current state and the bin string;

wherein, in response to a determination that the current state is a state in which a most-recently-decoded CLERS symbol is "S" and that the bin string is a one-bit bin string, the current CLERS symbol is determined to be an "E".

3. The method of claim 1, or the apparatus of claim 2, wherein, in response to a determination that the current state is a state in which a most-recently-decoded CLERS symbol is "C" and that the bin string is a one-bit bin string, the current CLERS symbol is determined to be an "R".

4. The method of claim 1 or claim 3 as it depends from claim 1, or the apparatus of claim 2 or claim 3 as it depends from claim 2 wherein the inverse binarization is performed using a lookup table.

5. The method of claim 1 or claims 3-4 as they depend from claim 1, or the apparatus of claim 2 or claims 3-4 as they depend from claim 2, wherein the inverse binarization is performed using the table

|  |  | Bin String |  |  |  |  |  |
|---|---|---|---|---|---|---|---|
|  |  | 0 | 10 | 11 | 110 | 1110 | 1111 |
| State | 0 | R | C | S |  |  |  |
|  | 1 | R | C | S |  |  |  |
|  | 2 | R | C | S |  |  |  |
|  | 3 | E | R |  | L | C | S |
|  | 4 | C | R |  | E | L | S |
|  | 5 | C | R |  | S | L | E |
|  | 6 | C | R |  | L | S | E |
|  | 7 | C | E |  | L | R | S |
|  | 8 | C | R |  | E | S | L |

or using any variation of the table obtained by one or more of: swapping all "0" and "1" values in the bin strings; swapping the CLERS symbols associated with bin strings "10" and "11" for any or all of the states 0 through 2; or swapping CLERS the symbols associated with bin strings "1110" and "1111" for any or all of the states 3 through 8.

6. The method of claim 1 or claims 3-5 as they depend from claim 1, or the apparatus of claim 2 or claims 3-5 as they depend from claim 2, wherein the current state is based on one or more of: a most recently decoded CLERS symbol, a CLERS symbol immediately preceding the most recently decoded CLERS symbol, a total number of CLERS symbols, or a number of successive decoded 'C' symbols through the most recently decoded CLERS symbol.

7. The method of claim 1 or claims 3-6 as they depend from claim 1, or the apparatus of claim 2 or claims 3-6 as they depend from claim 2, wherein the current state is selected from among no more than eight available states.

8. The method of claim 1 or claims 3-7 as they depend from claim 1, or the apparatus of claim 2 or claims 3-7 as they depend from claim 2, wherein the bin string representing a current CLERS symbol is obtained by arithmetic decoding of a bitstream.

9. A mesh encoding method comprising:

   encoding a first plurality of CLERS symbols;
   determining a current state based on at least one of the first plurality of CLERS symbols;
   obtaining a current CLERS symbol subsequent to the first plurality of CLERS symbols; and
   performing a binarization to obtain a bin string based on the current CLERS symbol and the current state;
   wherein, in response to a determination that the current state is a state in which a most-recently-encoded CLERS symbol is "S" and that the current CLERS symbol is "E", the bin string is a one-bit bin string.

10. A mesh encoding apparatus comprising one or more processors configured to perform at least:

    encoding a first plurality of CLERS symbols;
    determining a current state based on at least one of the first plurality of CLERS symbols;
    obtaining a current CLERS symbol subsequent to the first plurality of CLERS symbols; and
    performing a binarization to obtain a bin string based on the current CLERS symbol and the current state;
    wherein, in response to a determination that the current state is a state in which a most-recently-encoded CLERS symbol is "S" and that the current CLERS symbol is "E", the bin string is a one-bit bin string.

11. The method of claim 9, or the apparatus of claim 10, wherein, in response to a determination that the current state is a state in which a most-recently-encoded CLERS symbol is "C" and that the current CLERS symbol is "R", the bin string is a one-bit bin string.

12. The method of claim 9 or claim 11 as it depends from claim 9, or the apparatus of claim 10 or claim 11 as it depends from claim 10, wherein the binarization is performed using a lookup table.

13. The method of claim 9 or claims 11-12 as they depend from claim 9, or the apparatus of claim 10 or claims 11-12 as they depend from claim 10, wherein the binarization is performed using the table

|  |  | Bin String | | | | | |
|---|---|---|---|---|---|---|---|
|  |  | **0** | **10** | **11** | **110** | **1110** | **1111** |
|  | **0** | R | C | S |  |  |  |
|  | **1** | R | C | S |  |  |  |
|  | **2** | R | C | S |  |  |  |
|  | **3** | E | R |  | L | C | S |
| **State** | **4** | C | R |  | E | L | S |
|  | **5** | C | R |  | S | L | E |
|  | **6** | C | R |  | L | S | E |
|  | **7** | C | E |  | L | R | S |
|  | **8** | C | R |  | E | S | L |

or using any variation of the table obtained by one or more of: swapping all "0" and "1" values in the bin string; swapping the symbols associated with "10" and "11" for any or all of the states 0 through 2; or swapping the symbols associated with "1110" and "1111" for any or all of the states 3 through 8.

14. The method of claim 9 or claims 11-13 as they depend from claim 9, or the apparatus of claim 10 or claims 11-13 as they depend from claim 10, wherein the current state is based on one or more of: a most recently encoded CLERS symbol, a CLERS symbol immediately preceding the most recently encoded CLERS symbol, a total number of CLERS symbols, or a number of successive encoded 'C' symbols through the most recently encoded CLERS symbol.

15. The method of claim 9 or claims 11-14 as they depend from claim 9, or the apparatus of claim 10 or claims 11-15 as they depend from claim 10, wherein the current state is selected from among no more than eight available states.

FIG. 1

INTRA FRAME DECODER

FIG. 2

Input Mesh

302
PRE-PROCESSING
• FILTER NON-MANIFOLDS
• ADD DUMMY POINTS
• QUANTIZE ATTRIBUES

Topology

304
CONNECTIVITY CODING
WITH EDGEBREAKER

306
ATTRIBUTE
PREDICTIONS

Attribute
Residuals

310
ENTROPY
ENCODING

CLERS Table

Attributes

Bitstream

Decoded
Mesh

320
POST-PROCESSING
• REMOVE DUMMY POINTS
• RECREATE MANIFOLDS
• DEQUANTIZE ATTRIBUES

Attributes

316
ATTRIBUTE
PREDICTIONS AND
CORRECTIONS

314
CONNECTIVITY
DECODING WITH
EDGEBREAKER

312
ENTROPY
DECODING

Topology

Attribute Residuals

**FIG. 3**

EP 4 660 950 A1

Mesh indexed face set

PRE-PROCESSING
- FILTER NON-MANIFOLDS
- ADD DUMMY POINTS

CONFIGURATION

Mesh
corner
table

CONNECTIVITY CODING
- EDGEBREAKER

Connectivity
CLERS table

ENTROPY
CODING

Handles table,
Dummy table, &
other

ENTROPY
CODING

POSITION PREDICTIONS
- MULTI-PARALLELOGRAM

Position
Residuals

ENTROPY
CODING

UV COORDINATE PREDICTIONS
- MINIMAL STRETCH

UV coordinates
Residuals &
orientations

ENTROPY
CODING

OTHER PER VERTEX
ATTRIBUTES PREDICTIONS
- DELTA
- PARALLELOGRAM
- OTHER

Other residuals
& other data

ENTROPY
CODING

PER FACE ATTRIBUTES
PREDICTIONS
- DELTA
- OTHER

Per face
residuals

ENTROPY
CODING

METADATA

BITSTREAM

FIG. 4

**FIG. 5**

c.l=
8

c.v=3

c.r=
7

c=2

c.t=0

c.n=0

c.p=1

1

4

3

2

1

c.o
=5

4

**FIG. 6**

|  | V | O | TC | OTC | N | ON | Etc. |
|---|---|---|---|---|---|---|---|
| Triangle 0 Corner 0 | | | | | | | |
| Triangle 0 Corner 1 | | | | | | | |
| Triangle 0 Corner 2 | | | | | | | |
| Triangle 1 Corner 0 | | | | | | | |
| Triangle 1 Corner 1 | | | | | | | |
| Triangle 1 Corner 2 | | | | | | | |
| Etc. | | | | | | | |

**FIG. 7**

| positions | Table of vertex positions | 3 reals |
|---|---|---|
| uv_coordinates / a.k.a. uvcoords | Table of per vertex UV coordinates | 2 reals |
| normal_vectors / a.k.a. normals | Table of per vertex normal vectors | 3 reals |
| colors | Table of per vertex colors | 3 reals or u8 |
| faceIds | Table of per face material IDs | Signed integers |
| V | Position index of the corner | Signed integers |
| O | Opposite corner index of the corner | Signed integers |
| TC | Texture coordinate (UV) index of the corner | Signed integers |
| OTC | Opposite UV corner index of the corner | Signed integers |
| N | Normal vector index of the corner | Signed integers |
| ON | Opposite normal corner index | Signed integers |
| C | Color index of the corner | Signed integers |
| OC | Opposite color corner index | Signed integers |
| duplicates_map | A map that associates associate groups of duplicated points to a unique index from 0 to the number of split vertices minus 1 | int -> int |

# FIG. 8

| Class | Sequence | Bmesh intra ratio [%] | Bmesh inter ratio [%] | Disp ratio [%] | Texture ratio [%] | Meta ratio [%] |
|---|---|---|---|---|---|---|
| cat1-A | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | 0,0% | 0,0% | 0,0% | 0,0% | 0,0% |
| cat1-B | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | dancer_voxelised | -0,2% | 0,0% | 0,0% | 0,0% | 0,0% |
| | dancer_voxelised | -0,2% | 0,0% | 0,0% | 0,0% | 0,0% |
| | dancer_voxelised | -0,1% | 0,0% | 0,0% | 0,0% | 0,0% |
| | dancer_voxelised | -0,1% | 0,0% | 0,0% | 0,0% | 0,0% |
| | dancer_voxelised | -0,1% | 0,0% | 0,0% | 0,0% | 0,0% |
| cat1-C | football_voxelised | -0,1% | 0,0% | 0,0% | 0,0% | 0,0% |
| | football_voxelised | -0,1% | 0,0% | 0,0% | 0,0% | 0,0% |
| | football_voxelised | -0,1% | 0,0% | 0,0% | 0,0% | 0,0% |
| | football_voxelised | 0,0% | 0,0% | 0,0% | 0,0% | 0,0% |
| | football_voxelised | 0,0% | 0,0% | 0,0% | 0,0% | 0,0% |
| | levi_voxelised | -0,1% | 0,0% | 0,0% | 0,0% | 0,0% |
| | levi_voxelised | -0,1% | 0,0% | 0,0% | 0,0% | 0,0% |
| | levi_voxelised | -0,1% | 0,0% | 0,0% | 0,0% | 0,0% |
| | levi_voxelised | -0,1% | 0,0% | 0,0% | 0,0% | 0,0% |
| | levi_voxelised | 0,0% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | thomas_voxelised | -0,2% | 0,0% | 0,0% | 0,0% | 0,0% |
| | thomas_voxelised | -0,2% | 0,0% | 0,0% | 0,0% | 0,0% |
| | thomas_voxelised | -0,1% | 0,0% | 0,0% | 0,0% | 0,0% |
| | thomas_voxelised | -0,1% | 0,0% | 0,0% | 0,0% | 0,0% |
| | thomas_voxelised | -0,1% | 0,0% | 0,0% | 0,0% | 0,0% |
| | Cat1-A average | -0,1% | 0,0% | 0,0% | 0,0% | 0,0% |
| | Cat1-B average | -0,1% | 0,0% | 0,0% | 0,0% | 0,0% |
| | Cat1-C average | -0,1% | 0,0% | 0,0% | 0,0% | 0,0% |
| | Overall average | -0,1% | 0,0% | 0,0% | 0,0% | 0,0% |
| Overall | Total time [s] | | | | | |
| | Total time [%] | | | | | |

C1_ai – lossy geometry, lossy

## FIG. 9

| Class | Sequence | Bmesh intra ratio [%] | Bmesh inter ratio [%] | Disp ratio [%] | Texture ratio [%] | Meta ratio [%] |
|---|---|---|---|---|---|---|
| cat1-A | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | longdress_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | -0,1% | 0,0% | 0,0% | 0,0% | 0,0% |
| | soldier_voxelised | 0,0% | 0,0% | 0,0% | 0,0% | 0,0% |
| cat1-B | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | basketball_player_voxelis | -0,1% | 0,0% | 0,0% | 0,0% | 0,0% |
| | dancer_voxelised | -0,2% | 0,0% | 0,0% | 0,0% | 0,0% |
| | dancer_voxelised | -0,1% | 0,0% | 0,0% | 0,0% | 0,0% |
| | dancer_voxelised | -0,1% | 0,0% | 0,0% | 0,0% | 0,0% |
| | dancer_voxelised | -0,1% | 0,0% | 0,0% | 0,0% | 0,0% |
| | dancer_voxelised | -0,1% | 0,0% | 0,0% | 0,0% | 0,0% |
| cat1-C | football_voxelised | -0,1% | 0,0% | 0,0% | 0,0% | 0,0% |
| | football_voxelised | -0,1% | 0,0% | 0,0% | 0,0% | 0,0% |
| | football_voxelised | -0,1% | 0,0% | 0,0% | 0,0% | 0,0% |
| | football_voxelised | 0,0% | 0,0% | 0,0% | 0,0% | 0,0% |
| | football_voxelised | 0,0% | 0,0% | 0,0% | 0,0% | 0,0% |
| | levi_voxelised | -0,2% | 0,0% | 0,0% | 0,0% | 0,0% |
| | levi_voxelised | -0,1% | 0,0% | 0,0% | 0,0% | 0,0% |
| | levi_voxelised | -0,1% | 0,0% | 0,0% | 0,0% | 0,0% |
| | levi_voxelised | -0,1% | 0,0% | 0,0% | 0,0% | 0,0% |
| | levi_voxelised | 0,0% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | -0,1% | 0,0% | 0,0% | 0,0% | 0,0% |
| | mitch_voxelised | 0,0% | 0,0% | 0,0% | 0,0% | 0,0% |
| | thomas_voxelised | -0,1% | 0,0% | 0,0% | 0,0% | 0,0% |
| | thomas_voxelised | -0,1% | 0,0% | 0,0% | 0,0% | 0,0% |
| | thomas_voxelised | -0,1% | 0,0% | 0,0% | 0,0% | 0,0% |
| | thomas_voxelised | -0,1% | 0,0% | 0,0% | 0,0% | 0,0% |
| | thomas_voxelised | 0,0% | 0,0% | 0,0% | 0,0% | 0,0% |
| | Cat1-A average | -0,1% | 0,0% | 0,0% | 0,0% | 0,0% |
| | Cat1-B average | -0,1% | 0,0% | 0,0% | 0,0% | 0,0% |
| | Cat1-C average | -0,1% | 0,0% | 0,0% | 0,0% | 0,0% |
| | Overall average | -0,1% | 0,0% | 0,0% | 0,0% | 0,0% |
| Overall | Total time [s] | | | | | |
| | Total time [%] | | | | | |

C2_ra — lossy geometry, lossy

## FIG. 10

EP 4 660 950 A1

```
┌─────────────────────┐
│ 1102                │
│  DECODE A FIRST     │
│  PLURALITY OF CLERS │
│  SYMBOLS            │
└─────────────────────┘
           │
           ▼
┌─────────────────────┐
│ 1104                │
│  DETERMINE A CURRENT│
│  STATE BASED ON THE │
│  DECODED SYMBOLS    │
└─────────────────────┘
                      │
┌─────────────────────┐
│ 1106                │
│  OBTAIN BIN STRING  │
│                     │
└─────────────────────┘
           │
           ▼
┌─────────────────────┐
│ 1108                │
│  PERFORM INVERSE    │
│  BINARIZATION OF BIN│◄──
│  STRING             │
└─────────────────────┘
```

**FIG. 11**

```
┌─────────────────────┐
│ 1202                │
│  ENCODE A FIRST     │
│  PLURALITY OF CLERS │
│  SYMBOLS            │
└─────────────────────┘
           │
           ▼
┌─────────────────────┐
│ 1204                │
│  DETERMINE A CURRENT│
│  STATE BASED ON THE │
│  ENCODED SYMBOLS    │
└─────────────────────┘
                      │
┌─────────────────────┐
│ 1206                │
│  OBTAIN CURRENT     │
│  CLERS SYMBOL       │
└─────────────────────┘
           │
           ▼
┌─────────────────────┐
│ 1208                │
│  PERFORM            │
│  BINARIZATION OF BIN│◄──
│  STRING             │
└─────────────────────┘
```

**FIG. 12**

FIG. 13

Europäisches
Patentamt

European
Patent Office

Office européen
des brevets

# EUROPEAN SEARCH REPORT

**Application Number**

EP 24 30 5882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "Text of ISO/IEC CD 23090-29 Video-based mesh coding", 146. MPEG MEETING; 20240422 - 20240426; RENNES; (MOTION PICTURE EXPERT GROUP OR ISO/IEC JTC1/SC29/WG11), , no. n23903 4 June 2024 (2024-06-04), XP030319844, Retrieved from the Internet: URL:https://dms.mpeg.expert/doc_end_user/documents/146_Rennes/wg11/MDS23903_WG07_N00885.zip MDS23903_WG07_N00885/MDS23903_WG07_N00885_clean.docx [retrieved on 2024-06-04] * pages 296, 297; tables K-4, K-5 * ----- | 1-15 | INV. G06T9/00 H04N19/91 |
| Y | SZYMCZAK ANDRZEJ: "Optimized Edgebreaker encoding for large and regular triangle meshes", VISUAL COMPUTER, SPRINGER, BERLIN, DE, vol. 19, no. 4, 1 July 2003 (2003-07-01), pages 271-278, XP036004716, ISSN: 0178-2789, DOI: 10.1007/S00371-003-0208-0 [retrieved on 2003-07-01] * page 276; table 3 * ----- | 1-15 | TECHNICAL FIELDS SEARCHED (IPC)<br><br>G06T<br>H04N |

The present search report has been drawn up for all claims

| Place of search | Date of completion of the search | Examiner |
|---|---|---|
| Munich | 19 November 2024 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305505

- EP 2024058981 W

**Non-patent literature cited in the description**

- **J. ROSSIGNAC**. 3D compression made simple: Edgebreaker with ZipandWrap on a corner-table. *Proceedings International Conference on Shape Modeling and Applications, Genova, Italy*, 2001
- **H. LOPES** ; **G. TAVARES** ; **J. ROSSIGNAC** ; **A. SZYMCZAK** ; **A. SAFONOVA**. Edgebreaker: a simple compression for surfaces with handles. *ACM Symposium on Solid Modeling and Applications,, Saarbrucken*, 2002
- **J. ROSSIGNAC**. Edgebreaker: Connectivity compression for triangle meshes. *GVU center, Georgia Institute of Technology*, 1999
- **J. ROSSIGNIAC**. *Course on triangle meshes and corner table*, 2006

- **M. ISENBURG** ; **J. SNOEYINK**. Spirale Reversi: Reverse decoding of the Edgebreaker encoding. *Computational Geometry*, 2001, vol. 20, 39-52
- **K. MAMMOU** ; **J. KIM** ; **A. TOURAPIS** ; **D. PODBORSKI**. m59281 - [V-CG] Apple's Dynamic Mesh Coding CfP Response. Apple Inc, 2022
- Context Reduction for CLERS Coding. *ISO/IEC JTC1/SC29/WG7, m63910, Geneva*, July 2023
- Report on Context Reduction for CLERS Coding. *ISO/IEC JTC1/SC29/WG7, m64736, Hannover*, October 2023
- Report on Skip bit in CLERS Coding, ISO/IEC JTC1/SC29/WG7. *m65892*, January 2024